Europäisches Patentamt

European Patent Office

Office européen des brevets

(19)

(11) Veröffentlichungsnummer: **0 386 435**
**A2**

# (12) EUROPÄISCHE PATENTANMELDUNG

(21) Anmeldenummer: **90101629.5**

(22) Anmeldetag: **27.01.90**

(51) Int. Cl.⁵: **H04B 7/24**

(30) Priorität: **09.03.89 DE 3907568**

(43) Veröffentlichungstag der Anmeldung:
**12.09.90 Patentblatt 90/37**

(84) Benannte Vertragsstaaten:
**DE FR GB IT SE**

(71) Anmelder: **ROBERT BOSCH GMBH**
**Postfach 10 60 50**
**D-7000 Stuttgart 10(DE)**

(72) Erfinder: **Zechnall, Wolf, Dr.rer.nat.**
**Am Finkenberg 45**
**D-3200 Hildesheim(DE)**
Erfinder: **Vollmer, Rudolph, Dr.-Ing.**
**Bergfeldstrasse 21**
**D-3201 Barienrode(DE)**
Erfinder: **Ohler, Michael, Dipl.-Ing.**
**In der Dehne 4**
**D-3211 Despetal 2(DE)**
Erfinder: **Brägas, Peter, Dipl.-Ing.**
**Hausbergring 49**
**D-3200 Hildesheim(DE)**

(54) **Verfahren zur drahtlosen Übertragung von Informationen.**

(57) Es wird ein Verfahren zur drahtlosen Übertragung von Informationen vorgeschlagen, bei dem nicht belegte Übertragungskanäle von Funkdiensten, beispielsweise von Fernsehsendern verwendet werden. Das Verfahren nutzt die Kanäle der Funkdienste nur, solange kein Sendebetrieb erfolgt. Wird der Sendebetrieb aufgenommen, dann wird dies erkannt und der betreffende Kanal nicht mehr zur Funkübertragung benutzt. Durch Bandspreizung kann der Übertragungskanal für viele Funkgeräte gleichzeitig benutzt werden, ohne daß sie sich gegenseitig stören.

FIG.2

EP 0 386 435 A2

## Stand der Technik

Die Erfindung geht aus von einem Verfahren zur drahtlosen Übertragung von Informationen mit Funkgeräten nach der Gattung des Hauptanspruchs.

Es sind schon Funkgeräte bekannt, beispielsweise für den Mobilfunk, den Amateurfunk oder den Betriebsfunk, mit denen auf vorgegebenen Frequenzbändern eine drahtlose Übertragung von Informationen erfolgt. Es hat sich jedoch gezeigt, daß mit Zunahme der Funkgerätdichte die zur Verfügung stehenden Frequenzbänder nicht ausreichen, um einen störungsfreien Funkbetrieb zu ermöglichen. Insbesondere reicht beim Mobilfunk die Anzahl der in den Frequenzbändern vorhandenen Übertragungskanäle nicht aus, so daß Funkverbindungen entweder gestört sind oder erst nach langen Wartezeiten der Teilnehmer aufgebaut verden.

Neben diesen Frequenzbändern sind weitere Frequenzbänder von den Funkverwaltungen freigegeben, die für Funkdienste wie beispielsweise Fernseh- und Rundfunkanstalten reserviert sind. Diese Frequenzbänder sind zeitweise nicht belegt, da die Funkdienste nicht ständig ihre Sender in Betrieb nehmen.

## Vorteile der Erfindung

Das erfindungsgemäße Verfahren mit den kennzeichnenden Merkmalen des Hauptanspruchs hat demgegenüber den Vorteil, daß die vorhandenen Übertragungskanäle eines Funkdienstes in sendefreien Zeiten für die Übertragung von Informationen mit Funkgeräten verwendet werden. Damit stehen für die Funkgeräte wesentlich mehr Übertragungskanäle zur Verfügung, so daß gleichzeitig mehr Funkübertragungen durchgeführt werden können.

Als weiterer Vorteil ist anzusehen, daß vor Aufnahme des Sendebetriebes mit einem Funkgerät geprüft wird, welcher Übertragungskanal frei und damit für das Funkgerät verwendbar ist. Dadurch werden ungewollte Störungen des Funkdienstes vermieden.

Besonders vorteilhaft ist, daß auch während des Sendebetriebes das Einschalten des Funkdienstsenders überwacht wird. Dadurch kann die Funkübertragung sofort abgebrochen und der Übertragungskanal für den Funkdienst freigegeben werden, da er die höchste Priorität hat. Ebenfalls ist vorteilhaft, daß bei Abbruch der Funkübertragung auf einem Übertragungskanal auf einen weiteren nicht belegten Übertragungskanal automatisch umgeschaltet wird, auf dem dann die Funkübertragung fortgesetzt wird. Dadurch werden störende Unterbrechungen vermieden.

Durch die in den Unteransprüchen aufgeführten Maßnahmen sind vorteilhafte Weiterbildungen und Verbesserungen des im Hauptanspruch angegebenen Verfahrens möglich.

Besonders vorteilhaft ist, daß die Überwachung des momentan benutzten Übertragungskanales durch eine weitere Empfangseinheit erfolgt, die auf diesen Übertragungskanal abgestimmt ist. Dadurch kann auf einfache Weise das Einschalten des Funkdienstsenders überwacht wer den, ohne daß das laufende Funkgespräch gestört wird. Vorteilhaft ist auch, daß von der weiteren Empfangseinheit eine Regelspannung abgegeben wird, wenn dieser Übertragungskanal durch einen anderen Sender belegt ist. Diese Regelspannung ist auf einfache Weise aus dem empfangenen Signal dieses Übertragungskanals ableitbar. Um jedoch das Signal eines Fernsehsenders von dem eines anderen Senders unterscheiden zu können, ist es vorteilhaft, das empfangene Signal mit einer Einrichtung zur Zeilenfrequenzerkennung zu prüfen. Wird beispielsweise während der Funkübertragung ein Signal eines Fernsehsenders empfangen, dann muß sofort die Funkübertragung abgebrochen werden. Wird jedoch das Signal eines anderen Funkgerätes erkannt, dann wird die laufende Funkübertragung nicht abgebrochen, da das andere Funkgerät nicht die höchste Priorität aufweist.

Ein Vorteil ist auch darin zu sehen, wenn zur Erkennung eines Fernsehsenders die entsprechenden Ton- und Bildträgerfrequenzen gemessen und ausgewertet werden. Da diese einen bestimmten Aufbau haben, ist deren Erkennung mit einfachen Mitteln durchführbar.

Um Unterbrechungen der Funkübertragung zu vermeiden, ist es günstig, wenn während des Sendebetriebes des Funkgerätes kontinuierlich weitere freie Übertragungskanäle gesucht werden, auf die umgeschaltet werden kann, sobald der benützte Übertragungskanal von einem Sender mit höherer Priorität belegt wird. Da die Umschaltung sehr schnell durchführbar ist, ist der Informationsverlust während des Umschaltens des Funkgerätes sehr gering. Er läßt sich durch zusätzliche Maßnahmen, z.B. gleichzeitige Übertragung in zwei Kanälen oder festgelegte Sprungfolgen (Frequency Hopping) dadurch reduzieren, daß ein Zusatzkanal als Organisationskanal verwendet wird.

Besonders vorteilhaft ist auch, wenn von einem Funkgerät nur ein geringer Teil des nicht belegten Übertragungskanales benutzt wird. Da die Bandbreite beispielsweise eines Fernsehsenders sehr groß ist, für ein Funkgespräch jedoch nur ein relativ schmalbandiges Frequenzband benötigt wird, können auf dem Übertragungskanal des Fernsehsenders viele Funkgeräte nebeneinander ihren Sendebetrieb aufnehmen.

Als Vorteil ist besonders für die Erkennung eines Fernsehsenders anzusehen, daß sowohl die Einrichtung zur Zeilenfrequenzerkennung wie auch das weitere Empfangsteil jeweils ein Steuersignal an eine Steuereinheit abgeben. Die Steuereinheit kann aus der Kombination dieser Steuersignale auf einfache Weise unterscheiden, ob der empfangene Sender ein Fernsehsender oder ein anderer Sender bzw. ein anderes Funkgerät ist.

Weitere Vorteile der Erfindung sind der Beschreibung zu entnehmen.

Zeichnung

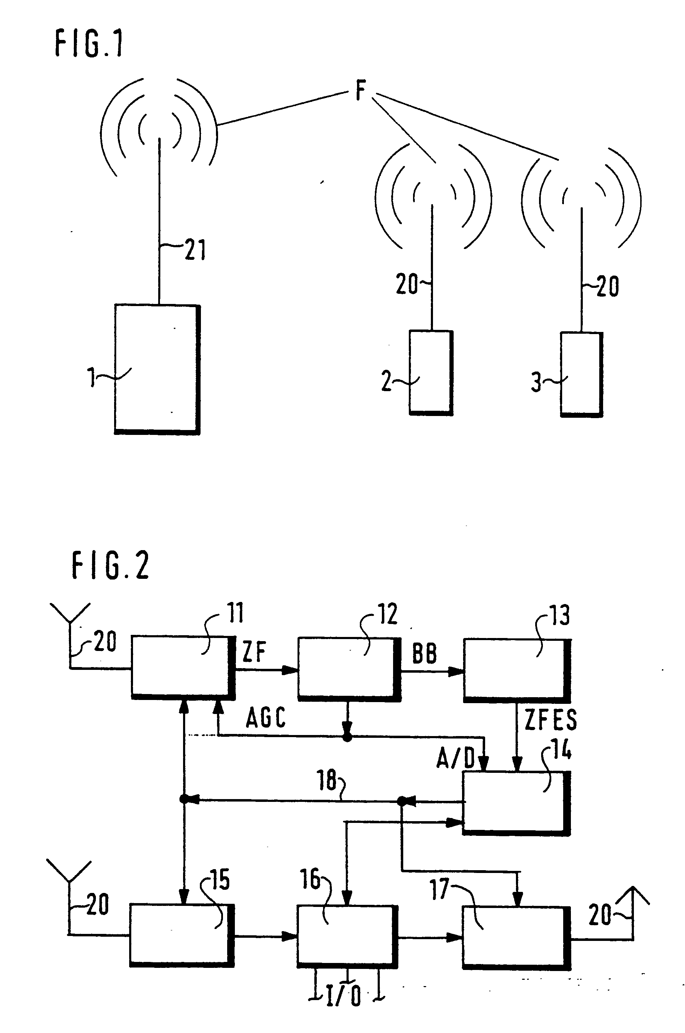

Ein Ausführungsbeispiel der Erfindung ist in der Zeichnung dargestellt und in der nachfolgenden Beschreibung näher erläutert. Es zeigt Figur 1 ein prinzipielles Ausführungsbeispiel und Figur 2 das Blockschaltbild eines Funkgerätes.

Beschreibung des Ausführungsbeispiels

In Figur 1 ist schematisch ein Sender 1 eines Funkdienstes, beispielsweise eines Fernsehsenders dargestellt, der über seine Sende-/Empfangsantenne 21 auf einem Übertragungskanal F senden kann. Weiterhin sind ein erstes und zweites Funkgerät 2, 3 dargestellt, die beispielsweise im Mobilfunk oder im mobilen Kleinstzellenfunk verwendet werden. Die Sende- und Empfangsteile dieser Funkgeräte 2, 3 sind ebenfalls auf den Übertragungskanal F abstimmbar. Sie weisen eine entsprechende Sende- und Empfangsantenne 20 auf.

In Figur 2 ist das Blockschaltbild eines dieser Funkgeräte 2, 3 dargestellt. Eine Antenne 20 ist mit einem Funkempfangsteil 15 verbunden, das auf den Übertragungskanal eines Funkdienstes abgestimmt ist. Das Funkempfangsteil 15 ist mit einer Signalaufbereitung 16 verbunden, die als Schnittstelle zur Eingabe und Ausgabe der Daten und Informationen dient. Ist das Funkgerät im Empfangsbetrieb, dann werden die aufbereiteten Empfangssignale über die Schnittstelle beispielsweise ausgegeben. Im Sendebetrieb erfolgt die Dateneingabe beispielsweise über eine Eingabestation, die an die Signalaufbereitung 16 anschließbar ist. Die Informationen und Daten werden dann einem Sender 17 zugeführt, der sie über die Antenne 20 abstrahlt. Sowohl die Empfangs- als auch die Sendeantenne sind zweckmäßigerweise so ausgeführt, daß sie für beide Funktionen verwendbar sind.

Das Funkgerät 2, 3 hat ein weiteres Hochfrequenzteil 11, das ebenfalls auf den Übertragungskanal beispielsweise eines Fernsehsenders abgestimmt ist. Es ist mit einer Zwischenfrequenz-Verarbeitung 12 verbunden, die aus dem empfangenen Signal eine Steuerspannung (AGC) ableitet.

Das demodulierte Signal der Zwischenfrequenzverarbeitung 12 wird einer Zeilenfrequenzerkennung 13 zugeführt. Die Zeilenfrequenzerkennung 13 erzeugt beim Vorhandensein eines Fernsehsignals ein zweites Steuersignal (ZFES), das zusammen mit dem ersten Steuersignal einer Steuereinheit 17 zugeführt wird.

Im folgenden ist die Funktionsweise dieses Funkgerätes beschrieben.

Das Funkempfangsteil 15 und der Sender 17 weisen die bekannten Baugruppen eines Funkgerätes auf. So enthält beispielsweise das Funkempfangsteil 12, das auf einen bestimmten Übertragungskanal abgestimmt ist, den Zwischenfrequenzteil sowie den Demodulator. Der Sender 17 weist als wesentliche Baugruppen die Sendeendstufe sowie frequenzbestimmende Glieder auf, in denen die Sendeenergie erzeugt und über die angeschlossene Sendeantenne 20 abgestrahlt wird. Das Funkempfangsteil 15 sowie der Sender 17 sind dem Fachmann bekannt, so daß eine nähere Beschreibung nicht notwendig ist.

Neben dem Funkempfangsteil 14 ist als weiteres Empfangsteil ein Hochfrequenzteil 11 vorgesehen, das neben einem Empfangsteil auch einen Kanalwähler mit einem Abstimmsystem enthält. Dieses Hochfrequenzteil 11 ist beispielsweise über die Übertragungskanäle eines Fernsehbandes durchstimmbar. Die Abstimmung erfolgt über die Steuereinheit 14, die über den Steuerbus 18 einen Übertragungskanal des Funkdienstes, beispielsweise eines Fernsehsenders einstellt. Mit dem Hochfrequenzteil 11 wird der eingestellte Übertragungskanal auf Belegung durch einen anderen Sender überwacht. Empfängt er beispielsweise auf dem eingestellten Übertragungskanal ein Signal, dann muß dieses Signal aufbereitet werden, um einerseits der Steuereinheit 14 mitteilen zu können, daß ein Signal vorhanden ist und andererseits zu differenzieren, ob es sich um einen Fernsehsender oder einen Sender eines weiteren Funkgerätes handelt. Das Signal wird daher zunächst in der Zwischenfrequenz-Verarbeitung 12 verstärkt und demoduliert und daraus eine erste Steuerspannung (Automatic-Gain-Control = AGC-Spannung) erzeugt. Die Steuerspannung ist ein Maß für die Feldstärke des empfangenen Senders. Sie wächst mit zunehmender Feldstärke des Senders und kann daher auch zur Bewertung der Empfangsqualität eines Senders herangezogen werden. Mit diesem Steuersignal (AGC) wird zunächst festgestellt, ob der angesteuerte Übertragungskanal von einem anderen Sender belegt ist.

Die Bewertung eines empfangenen Fernsehsignals erfolgt mit einer Einrichtung, die als Zeilenfrequenzerkennung 13 bezeichnet ist. Da bei Fernsehsignalen eine Bildübertragung zeilenweise erfolgt, ist aus der speziellen Struktur des Signales ein Fernsehsender erkenn bar. Aus dieser Struktur leitet die Zeilenfrequenzerkennung 13 ein weiteres Steuersignal (ZFES) ab, das sie ebenfalls der Steuereinheit 14 zuführt. Aus den beiden Steuersignalen (AGC, ZFES) ermittelt nun die Steuereinheit 14, ob der angewählte Übertragungskanal belegt ist und ob ein Fernsehsender, der die höchste Belegungspriorität hat, auf diesem Kanal sendet. Fehlt das Steuersignal (ZFES), und ist nur das Steuersignal (AGC) vorhanden, dann ist das ein Hinweis darauf, daß der Kanal durch einen anderen Sender, beispielsweise durch ein weiteres Funkgerät belegt ist.

Die einzeln beschriebenen Baugruppen sind aus der Fernsehempfangstechnik dem Fachmann bekannt, sie sind nicht Gegenstand der Erfindung.

Zur Aufnahme des Sendebetriebes mit dem Funkgerät 2 schaltet die Steuereinheit 14 über den Steuerbus 18 den Kanalwähler des Hochfrequenzteils 11 auf die einzelnen Übertragungskanäle. Bei jedem Kanal wird geprüft, ob eines der beiden Steuersignale (AGC, ZFES) vorhanden ist. Wird keines der Signale erkannt, dann ist dieser Übertragungskanal für eine Funkübertragung frei. Für diesen Fall schaltet die Steuereinheit 14 die Signalaufbereitung 16 zur Übertragung durch. Die Signalaufbereitung 16 beinhaltet die Ein- und Ausgaben, beispielsweise eine Tastatur und eine Anzeige sowie die notwendigen Einrichtungen zur Anpassung der Signale. Auch diese Einrichtung ist dem Fachmann bekannt.

Während der Funkübertragung wird von der Steuereinheit 14 der benutzte Übertragungskanal laufend auf das Einschalten eines anderen Senders überwacht. Wird das Einschalten des Fernsehenders durch die Bildung der beiden Steuersignale (AGC, ZFES) erkannt, dann wird der Sendebetrieb des Funkgerätes durch die Steuereinheit 14 auf diesem Übertragungskanal sofort unterbrochen. Weil der Fernsehsender nicht durch das Funkgerät gestört werden darf, muß ein anderer, nicht belegter Übertragungskanal gesucht werden. Zu diesem Zweck hatte das Hochfrequenzteil 11 vorher alle verfügbaren Übertragungskanäle abgesucht, und sich einen oder mehrere nicht belegte Übertragungskanäle gemerkt. Die Steuereinheit 14 schaltet nun das Funkempfangsteil 15 sowie den Sender 17 auf den neuen, nicht belegten Übertragungskanal um. Der Sendebetrieb wird nun auf diesem Kanal fortgesetzt, dessen Kennzeichen in geeigneter Weise dem Empfänger mitgeteilt wurden.

Wurde bei der Überprüfung des Übertragungskanals lediglich ein Steuersignal (AGC) gebildet, dann erkennt die Steuereinheit 14, daß sich kein Fernsehsender, sondern ein anderer Sender, beispielsweise ein anderes Funkgerät dazugeschaltet hat. In diesem Fall wird die Steuereinheit 14 den Sendebetrieb dieses Funkgerätes 2 aufrechterhalten. Das Umschalten auf einen anderen Übertragungskanal ist nicht erforderlich, denn es handelt sich um einen neuen Teilnehmer, der sich an die festgelegten Konventionen halten muß. In diesen Konventionen ist beispielsweise festgelegt, daß ein neuer Teilnehmer zuerst seine Berechtigung zum Einschalten in den bestehenden Funkdienst prüfen muß, bevor er sich dazuschalten darf.

Es sind verschiedene Zugriffverfahren bekannt, von denen zunächst das R-ALOHA-Verfahren erläutert wird. In einem Funknetz sind mehrere Teilnehmer vorhanden, die auf eine Zugriffserlaubnis für eine Funkverbindung warten. Bei dem R-ALOHA-Verfahren besitzen alle Teilnehmer den gleichen Rang, so daß keine Prioritätsliste erforderlich ist. Jeder Teilnehmer versucht bei seinem Eintritt in das Netz einen freien Kanal zufallsgesteuert zu belegen. Die vernetzten Teilnehmer bestätigen den erfolgreichen Zugriff in geeigneter Form. Damit wird der neue Teilnehmer integriert und der gewählte Kanal bleibt für ihn reserviert.

Bei dem CSMA-Verfahren wird dagegen zunächst einmal der Übertragungskanal abgehört und dabei dessen Verfügbarkeit überprüft. Ist er nicht belegt, dann erfolgt die Übertragung. Im anderen Fall wird gewartet, bis der Kanal zur Übertragung zur Verfügung steht.Um beim Umschalten die Unterbrechungszeit eines Funkgespräches möglichst gering zu halten, ist vorgesehen, daß nicht nur der momentan benutzte Übertragungskanal kontinuierlich auf Belegung überwacht wird sondern auch weitere Übertragungskanäle eines Funkdienstes. Nicht belegte Übertragungskanäle werden gespeichert, so daß eine Umschaltung sofort und ohne wesentliche Unterbrechung des Funkbetriebes und damit praktisch ohne Informationsverlust auf den neuen Übertragungskanal umgeschaltet werden kann.

Da der Übertragungskanal eines Fernsehenders im Vergleich zu dem eines Funkgerätes relativ breitbandig ist, ist er zur besseren Ausnutzung in viele Teilkanäle aufteilbar. Dadurch kann eine Vielzahl von Funkgeräten, wie sie beispielsweise beim mobilen Kleinstzellenfunk verwendet werden, gleichzeitig betrieben werden.

Im folgenden wird ein weiteres Übertragungsverfahren beschrieben.

Bei der Aufspreizung eines Übertragungskanals auf eine große Bandbreite ergibt sich der Vorteil, daß dieses Signal viel weniger Störungen verursacht. Derartige bandspreizende Verfahren sind als Spread-Spectrum-Technik bekannt. Mit speziellen Techniken ist die Mehrfach-Belegung dieser Kanäle möglich. Ein Belegungsverfahren ist beispielsweise durch Anwendung von Gold-Codes möglich. Diese Verfahren sind dem Fachmann bekannt und müssen daher nicht näher beschrieben werden.

Wird auf einem Übertragungskanal eine Vielzahl von Funkgesprächen gleichzeitig geführt, dann ist insbesondere bei ständig wechselnden Teilnehmern, wie sie beim mobilen Kleinstzellenfunk vorhanden sind, eine entsprechende Koordination vorzusehen. Ein Verfahren zur Synchronisation und zum Routing in teilvermaschten Kommunikationsnetzen ist in der DE-OS 36 16 235 beschrieben.

In weiterer Ausgestaltung der Erfindung ist vorgesehen, die Belegung eines Übertragungskanals durch einen Fernsehsender über das auf diesen Übertragungskanal abgestimmte Funkempfangsteil 15 zu analysieren. In diesem Fall bildet die Signalaufbereitung 16 ein entsprechendes Steuersignal, das sie an die Steuereinheit 14 weitergibt. Das Hochfrequenzteil 11, die Zwischenfrequenzverarbeitung 12 und die Zeilenfrequenzerkennung 13 sind dann nicht mehr erforderlich.

**Ansprüche**

1. Verfahren zur drahtlosen Übertragung von Informationen mit Funkgeräten auf einem Übertragungskanal, der für einen Sender eines bestimmten Funkdienstes, beispielsweise eines Fernsehsenders oder eines Rundfunksenders, reserviert ist und der zeitweise nicht von dem Funkdienst belegt ist, dadurch gekennzeichnet, daß die Übertragungskanäle des Funkdienstes vom Funkgerät (2) anwählbar sind, daß das Funkgerät (2) vor Aufnahme des Sendebetriebes automatisch die Übertragungskanäle (F) des Funkdienstes auf Belegung überprüft, daß beim Auffinden mindestens eines nicht belegten Übertragungskanals das Funkgerät (2) auf Sendebetrieb umschaltbar ist und daß das Funkgerät (2) während des Sendebetriebes mindestens folgende Funktionen ausübt: Überwachung des benutzten Übertragungskanals (F) auf Einschalten des Senders (1) des Funkdienstes, Unterbrechung des Sendebetriebes, wenn der Sender (1) des Funkdienstes auf diesem Übertragungskanal (F) in Betrieb geht, Aufsuchen mindestens eines weiteren nicht belegten Übertragungskanals, automatische Umschaltung und Fortsetzung des Sendebetriebs auf dem weiteren nicht belegten Übertragungskanal.

2. Verfahren nach Anspruch 1, dadurch gekennzeichnet, daß die Überwachung des benutzten Übertragungskanals (F) durch eine weitere Empfangseinheit (11) für diesen Funkdienst erfolgt, die auf diesen Übertragungskanal (F) abgestimmt ist.

3. Verfahren nach Anspruch 2, dadurch gekennzeichnet, daß die Überwachung durch eine Regelspannung (AGC) der weiteren Empfangseinheit (11) erfolgt.

4. Verfahren nach einem der vorhergehenden Ansprüche, dadurch gekennzeichnet, daß zur Erkennung eines Fernsehsenders eine Einrichtung zur Zeilenfrequenzerkennung (13) vorgesehen ist.

5. Verfahren nach einem der Ansprüche 1 bis 3, dadurch gekennzeichnet, daß zur Erkennung eines Fernsehsenders entsprechende Frequenzbänder des Ton- und Bildträgers gemessen und ausgewertet werden.

6. Verfahren nach einem der vorhergehenden Ansprüche, dadurch gekennzeichnet, daß während des Sendebetriebes des Funkgerätes (2) weitere freie Übertragungskanäle kontinuierlich gesucht werden.

7. Verfahren nach einem der vorhergehenden Ansprüche, dadurch gekennzeichnet, daß beim Einschalten des Senders (1) eines Funkdienstes der Sendebetrieb des Funkgerätes (2) unmittelbar unterbrochen wird.

8. Verfahren nach Anspruch 7, dadurch gekennzeichnet, daß der Sendebetrieb des Funkgerätes (2) unmittelbar auf einem weiteren nicht belegten Übertragungskanal fortgesetzt wird.

9. Verfahren nach einem der vorhergehenden Ansprüche, dadurch gekennzeichnet, daß der nicht belegte Übertragungskanal (8) eines Funkdienstes in mehrere schmalbandigere Kanäle aufgeteilt wird, auf denen jeweils ein Funkgerät (2) senden kann.

10. Verfahren nach einem der vorhergehenden Ansprüche, dadurch gekennzeichnet, daß vor einem Kanalwechsel dem Empfänger ein Datentelegramm mit der neuen Kanalkennung übertragen wird.

11. Verfahren nach einem der vorhergehenden Ansprüche, dadurch gekennzeichnet, daß nach dem Umschalten auf einen neuen Übertragungskanal der Sendebetrieb auf dem alten Übertragungskanal für eine kurze Zeitspanne aufrechterhalten wird.

12. Verfahren nach einem der vorhergehenden Ansprüche, dadurch gekennzeichnet, daß neben dem Übertragungskanal ein Organisationkanal vorgesehen ist, auf dem Stuerdaten, vorzugsweise über die Verweilzeit auf dem Übertragungskanal, Synchronisationsdaten, Frequenzangaben und/oder Teilnehmercodes für den Funkdient übertragen werden.

13. Verfahren nach einem der vorhergehenden Ansprüche, dadurch gekennzeichnet, daß die Organisation der Funkübertragung nach festgelegten Funkprotokollen, vorzugsweise CSMA und/oder R-ALOHA erfolgt.

EP 0 386 435 A2

FIG.1

FIG.2